# EUROPÄISCHE PATENTSCHRIFT

(11) **EP 0 566 607 B1**
(45) Veröffentlichungstag und Bekanntmachung des Hinweises auf die Patenterteilung: **07.09.1994**
(21) Anmeldenummer: 92901947.9
(22) Anmeldetag: 19.12.1991
(51) Int. Cl.: B60T 13/66, B60T 17/02, B60T 8/32

(54) **RADBREMSBAUGRUPPE FÜR MODULARES BREMSSYSTEM**
WHEEL BRAKE SUBASSEMBLY FOR MODULAR BRAKING SYSTEMS
ENSEMBLE DE FREIN DE ROUE POUR SYSTEME MODULAIRE DE FREINAGE

(30) Priorität: 15.01.1991 DE 4100966
(43) Veröffentlichungstag der Anmeldung: 27.10.1993
(73) Patentinhaber: ALFRED TEVES GmbH, 60441 Frankfurt (DE)
(72) Erfinder: DROTT, Peter, D-6230 Frankfurt 80 (DE)
(74) Vertreter: Portwich, Peter
(86) Internationale Anmeldenummer: EP9102448
(87) Internationale Veröffentlichungsnummer: WO9212880

(56) Entgegenhaltungen:
- EP-A- 0 310 461
- DE-A- 2 128 169
- DE-A- 3 807 056
- GB-A- 1 359 487

## Beschreibung

Die Erfindung betrifft eine eigenständige Radbremsbaugruppe für ein modulares Bremssystem eines Kraftfahrzeugs.

Bekannte Bremssysteme für Kraftfahrzeuge sind als hydraulische oder pneumatische Bremsanlagen aufgebaut. Diese bestehen im wesentlichen aus einer zentralen Betätigungseinheit, die über Versorgungsleitungen mit den im Bereich der Fahrzeugräder dezentral angeordneten Radbremsen verbunden sind. Die zur Betätigung der Bremsanlage erforderliche Energie wird in der zentralen Betätigungseinheit bereitgestellt und mittels der Versorgungsleitungen auf die Radbremsen verteilt. Auch die Steuerung der Radbremsen erfolgt über die Versorgungsleitungen.

In einer einfachen hydraulischen Bremsanlage wird die Betätigungseinheit über ein Bremspedal vom Fahrer gesteuert und gleichzeitig mit Energie versorgt. In komplexeren Bremsanlagen wird die Steuerung der Radbremsen beispielsweise durch ein Antiblockiersystem (ABS) oder eine automatische Schlupfregelung (ASR) und die Energieversorgung durch einen Bremskraftverstärker oder eine hydraulische Pumpe ergänzt. Diese Zusatzaggregate und Systeme sind ebenfalls zentral angeordnet und beziehen ihre Energie in jedem Fall aus dem Fahrzeugmotor, im allgemeinen indirekt über das elektrische Bordnetz.

Solche bekannten Bremssysteme haben jedoch den Nachteil eines erheblichen Montageaufwands und stehen damit im Widerspruch zu den Anforderungen des modernen Fahrzeugbaus, insbesondere die Kosten für die Endmontage zu verringern. Die hohen Montagekosten sind im wesentlichen darauf zurückzuführen, daß neben den Radbremsen diverse zentrale Aggregate eingebaut und miteinander vernetzt werden müssen. Dabei ist die Verlegung und der Anschluß von Hydraulikleitungen und -schläuchen besonders aufwendig und störanfällig. Dazu kommen elektrische Leitungen, die der Informationsübertragung dienen, beispielsweise zur Verbindung von Drehgeschwindigkeitssensoren am Fahrzeugrad mit der zentralen ABS-Regelung.

Aus der GB-A-1 359 487 ist eine Radbremsbaugruppe für Kraftfahrzeuge bekannt, bei der jeweils eine hydraulische Radbremse, eine hydraulische Pumpe und Steuerventile zusammen mit einem Sensor zur Ermittlung der Drehgeschwindigkeit des Fahrzeugrades und mit einer zugehörigen Steuerelektronik als Einheit zusammengefaßt und am Fahrzeugrad montiert sind. Die Pumpe ist jedoch nicht allein für die Bremsbetätigung zuständig, sondern dient nur zur Modulation des hydraulischen Drucks in der Radbremse. Die Bremsbetätigung erfolgt hauptsächlich auf herkömmliche Weise über eine hydraulische Druckleitung, die aus einer zentralen Versorgungseinheit, beispielsweise einem Hauptbremszylinder die Betätigungsenergie in Form von hydraulischem Druck an die Radbremsen weiterleitet. Insofern unterscheidet sich diese bekannte Radbremsbaugruppe nicht wesentlich von den weiter oben diskutierten Anordnungen.

Ein weiterer Nachteil komfortabler Bremssysteme ist darin zu sehen, daß sie ihre Energie aus dem elektrischen Bordnetz beziehen. Im modernen Fahrzeug wird das Bordnetz ohnehin mit einer ständig zunehmenden Zahl von Verbrauchern belastet. Als Konsequenz müssen Lichtmaschine, Batterie und Leitungsnetz verstärkt werden, wodurch sich die Herstellungskosten erhöhen. Schließlich sei auf den steigenden Energieverbrauch hingewiesen, der letztendlich zu einem erhöhten Treibstoffverbrauch führt und in Anbetracht der damit verbundenen Umweltproblematik nicht einfach hingenommen werden kann.

Aus der DE-A-2 128 169 ist ein elektrisch zu betätigendes Bremssystem bekannt, bei dem eine Radbremse zusammen mit elektrischen Betätigungselementen und dazugehörigen Regelungselementen als Einheit ausgeführt und am Fahrzeugrad angeordnet sind. Jedoch erfolgt nicht nur die elektrische Steuerung der Bremsbetätigung sondern auch die elektrische Energieversorgung von zentraler Stelle aus dem Fahrzeug, wobei das Bordnetz weiterhin stark belastet bleibt.

Der Erfindung liegt daher die Aufgabe zugrunde, einen Beitrag zur Verbesserung eines Bremssystems für Kraftfahrzeuge zu leisten, wodurch die Nachteile herkömmlicher Bremssysteme, insbesondere hinsichtlich des Endmontageaufwands und des Energieverbrauchs vermieden werden.

Die Lösung der Aufgabe ergibt sich aus dem kennzeichnenden Teil des Hauptanspruchs. Im Prinzip besteht die Lösung darin, neben der Radbremse auch die zu ihrer Betätigung erforderlichen Versorgungs- und Regelungsaggregate im Bereich des Fahrzeugrades anzuordnen. Mit der erfindungsgemäßen Anordnung wird zumindest ein hydraulisches Leitungsnetz, ein zentraler Hauptbetätigungszylinder und ein Druckregler für die Hinterachsbremsen sowie die damit verbundenen Fertigungs- und Montagekosten vollständig eingespart. Die Betätigungsenergie für die Bremse wird aus der kinetischen Energie des Fahrzeugs gewonnen, wodurch einerseits eine separate elektrische Versorgungsleitung wegfallen kann und andererseits ein Beitrag zur Kraftstoffersparnis geleistet wird. Außerdem wird dabei das elektrische Bordnetz entlastet, durch dessen schwächere Auslegung ein weiterer Kostenvorteil erzielt werden kann. Durch den Wegfall von Hydraulikleitungen, Hauptzylinder und Regler wird der Volumenverbrauch der Bremsanlage und damit der Bedarf an Betätigungsenergie zusätzlich um etwa 25% gesenkt.

Bei einer eventuellen Erweiterung der Bremsanlage kommt ein zusätzlicher Vorteil des modularen Bremssystems zum Tragen. Beispielsweise können die Bremsen eines mit erfindungsgemäßen Bremsbaugruppen ausgerüsteten Anhängers ohne nennenswerten Aufwand integriert und von der zentralen Betätigungseinheit des Zugfahrzeugs betätigt werden.

Vorteilhafte Ausgestaltungsformen der Erfindung sind in den Unteransprüchen beschrieben.

Eine Ausführung der hydraulischen Pumpe nach Anspruch 2 ist besonders einfach, robust und kostengünstig.

In einer bevorzugten Ausgestaltungsform gemäß Anspruch 3 sind die zur Versorgung der Bremse und Regelung des Bremsdrucks bestimmten Bauteile zu einem kompakten Hydraulikaggregat zusammengefaßt, das gemäß Anspruch 4 am besten am Achsschenkel des Fahrzeugs befestigt wird.

Eine Weiterbildung der Erfindung gemäß Anspruch 5 sieht vor, zusätzlich auch die Radbremse in die gebildete Einheit mit einzubeziehen, wodurch ein kompaktes Bremsaggregat entsteht, das gemäß Anspruch 6 ebenfalls mit Vorteil am Achsschenkel des Fahrzeugs befestigt wird. Dabei kann die hydraulische Pumpe in dieses Bremsaggregat integriert oder als separates Bauteil ausgeführt sein, das direkt neben der Radnabe angeordnet ist.

Besonders kostengünstig ist eine Ausführungsform gemäß Anspruch 7, bei der alle wesentlichen Bauteile zusammen mit dem Achsschenkel als vormontierte Einheit geliefert werden, die bei der Endmontage des Fahrzeugs mit wenigen Handgriffen oder vollautomatisch mittels eines Roboters eingebaut wird. Eine Vernetzung der Bremsanlage im Fahrzeug während der Endmontage entfällt zum größten Teil. Im wesentlichen muß nur eine elektrische Steuerleitung eingesteckt werden. Das modulare Bremssystem ist außerdem sehr übersichtlich und servicefreundlich.

Die erfindungsgemäße Radbremsbaugruppe wird gemäß Anspruch 8 durch die Einbeziehung eines Mikroprozessors noch verbessert. Der Mikroprozessor übernimmt die Steuerung des Bremsdrucks und ist über ein Datenbussystem mit der zentralen Betätigungseinheit im Fahrzeug direkt oder indirekt über einen Zentralprozessor verbunden.

Eine solche Anordnung ist besonders vorteilhaft, wenn das Fahrzeug ohnehin mit einem Datenbussystem bzw. einem Zentralprozessor ausgestattet ist. Zukunftsentwicklungen laufen nämlich auf eine solche Ausstattung hinaus, um den Datenfluß im Fahrzeug übersichtlicher und einheitlicher zu gestalten und eine unwirtschaftlich hohe Zahl von Signalkabeln zu vermeiden.

Der Mikroprozessor mit Datenbus am Fahrzeugrad wäre ein Beitrag zu einem solchen neuen Gesamtkonzept und könnte gemäß Anspruch 9 gleichzeitig einen Teil der Antiblockier- bzw. Antischlupfregelung ausführen. Durch individuelle Vorauswertung der Sensorsignale und genaue Steuerung der Stellorgane nach vorgegebenen Sollwerten ergeben sich hervorragende Regeleigenschaften.

Weiterhin können andere wichtige Größen und Funktionsmerkmale, wie beispielsweise die Belagabnutzung in der Radbremse oder der Reifendruck mittels geeigneter Sensoren vom Mikroprozessor überwacht werden. Gegebenenfalls kann auch die Steuerung benachbarter Systeme mit einbezogen werden. Dies betrifft beispielsweise eine automatische Reifendruckregelung, eine Höhenverstellung des Fahrwerks oder eine Regelung von dessen Dämpfungseigenschaften.

Zwei Ausführungsbeispiele der Erfindung werden nachfolgend anhand der Zeichnungen näher erläutert.

Es zeigen
- Fig. 1: einen Hydraulikschaltplan einer erfindungsgemäßen Radbremseinheit,
- Fig. 2: eine Teilansicht eines Achsschenkels mit eingebautem Hydraulikaggregat in einer ersten Ausführungsform,
- Fig. 3: einen Schnitt gemäß A-A aus Fig. 2,
- Fig. 4: einen Schnitt gemäß B-B aus Fig. 2,
- Fig. 5: eine teilweise geschnittene Draufsicht auf ein Bremsaggregat,
- Fig. 6: eine Draufsicht auf eine erfindungsgemäße Radbremseinheit in einer zweiten Ausführungsform,
- Fig. 7: einen Schnitt gemäß C-C aus Fig. 6.

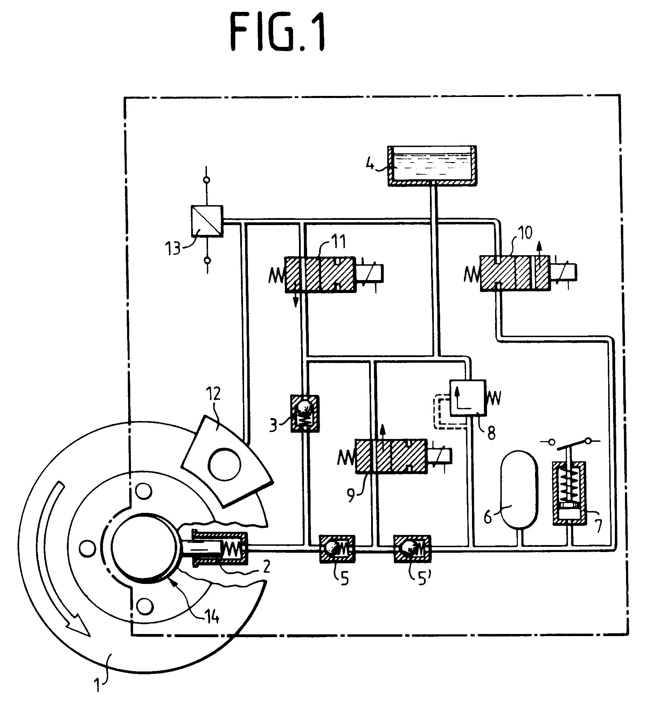

Zur Erläuterung der Funktionsweise einer erfindungsgemäßen Radbremseinheit ist diese mittels eines Hydraulikschaltplans in Fig. 1 schematisch dargestellt. Man erkennt eine Bremsscheibe 1 des Fahrzeugrades mit einer Scheibenbremse 12. Eine hydraulische Kolbenpumpe 2 wird über einen an der Radnabe angeordneten Exzenter 14 vom Fahrzeugrad angetrieben. Dabei wird Hydraulikflüssigkeit aus dem Vorratsbälter 4 über das Saugventil 3 angesaugt und über die Druckventile 5,5' in den Druckspeicher 6 gepumpt. Wenn der maximal zulässige Druck erreicht ist, wird ein Druckschalter 7 betätigt. Mittels einer nicht gezeigten elektrischen Schaltung öffnet der Druckschalter 7 ein elektrisch zu betätigendes Kurzschlußventil 9. Dadurch wird der Druck zwischen den Ventilen 5 und 5' abgebaut. Die Hydraulikflüssigkeit fließt nun über die Ventile 3,5 und 9 im Kreis. Aufgrund des geschlossenen Druckventils 5' bleibt aber der Druck im Druckspeicher 6 erhalten. Aus Sicherheitsgründen ist zwischen dem Druckspeicher 6 und dem drucklosen Vorratsbehälter 4 ein Überdruckventil 8 vorgesehen, über das im Notfall ein unzulässig hoher Druck abgebaut wird.

In einer weiteren, nicht gezeigten Ausführungsform wird bei Erreichen des maximalen Drucks im Druckspeicher 6 die Kolbenpumpe 2 abgeschaltet, indem der Kolben 26 mittels einer zusätzlichen, elektrisch oder hydraulisch betätigten Vorrichtung vom Exzenter 14 abgehoben wird. Dadurch werden Reibungsverluste weitgehend oder vollständig vermieden.

Zur Einleitung einer Bremsung wird das elektrisch betätigte Druckaufbauventil 10 geöffnet, so daß Hydraulikflüssigkeit aus dem Druckspeicher 6 in die Radbremse 12 fließen kann. Dabei wird in der Radbremse 12 hydraulischer Druck aufgebaut und nicht gezeigte Bremsklötze gegen die Bremsscheibe 1 gepreßt. Zum Lösen der Bremse wird bei geschlossenem Druckaufbauventil 10 das Druckabbauventil 11 geöffnet, über das Hydraulikflüssigkeit aus der Radbremse 12 zurück in den Vorratsbehälter 4 fließen kann. Dabei wird der hydraulische Druck in der Radbremse 12 abgebaut. Mittels eines elektrischen Drucksensors 13 wird der in der Radbremse 12 herrschende Bremsdruck gemessen. Der Drucksensor 13 ist mit einem nicht gezeigten Mikroprozessor elektrisch verbunden. Der Mikroprozessor vergleicht einen vorgegebenen Sollwert mit dem vom Drucksensor 13 gemessenen Ist-Wert des Bremsdrucks und schaltet die Ventile 10,11, bis der vorgegebene Druck eingestellt ist. Der Bremsdruck wird entweder vom Fahrer des Fahrzeugs mittels eines elektrischen Bremspedals vorgegeben oder durch eine Antiblockier- bzw. Antischlupfregelschaltung errechnet.

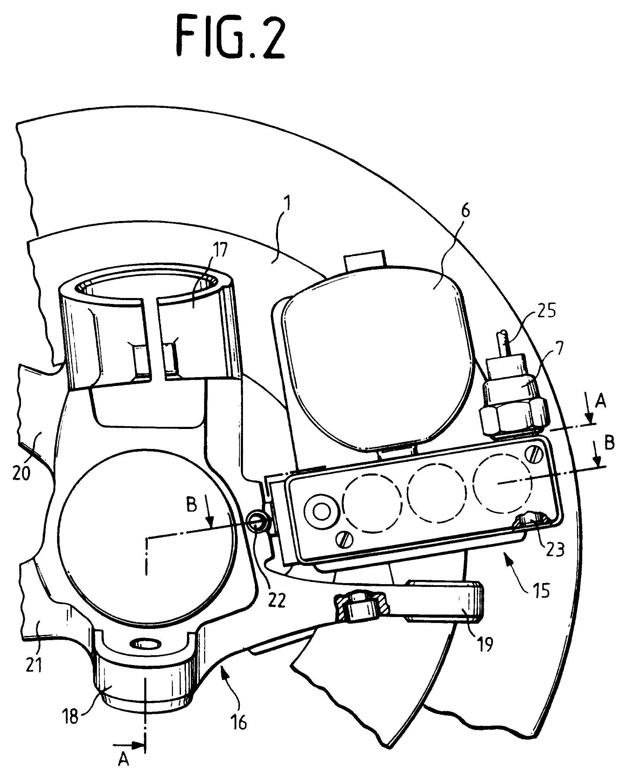

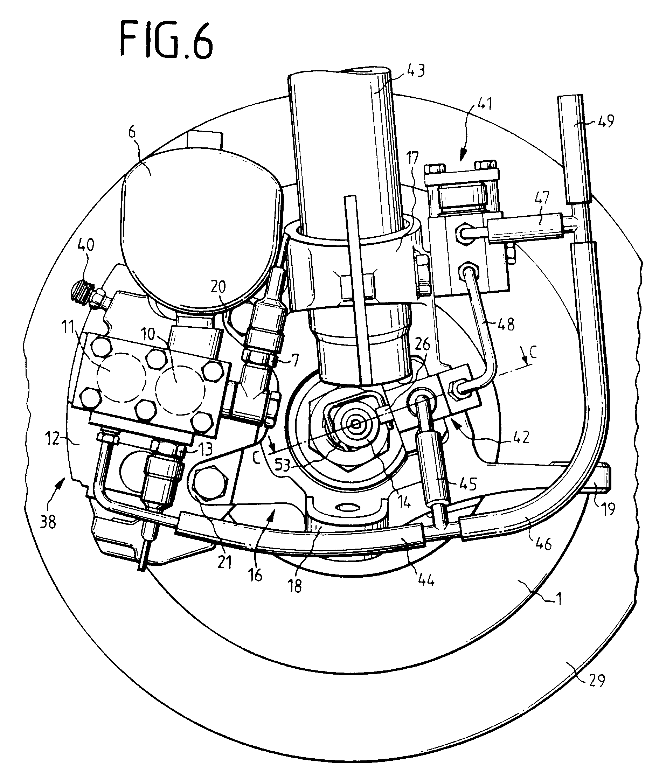

In einer ersten Ausführungsform der Radbremsbaugruppe sind die hydraulische Pumpe 2, die Ventile 3,5,5',8,9,10,11, der Druckspeicher 6, der Druckschalter 7 und der Drucksensor 13 in einem kompakten Hydraulikaggregat 15 als Einheit zusammengefaßt, das, wie in Fig. 2 dargestellt, am Achsschenkel 16 des Fahrzeugs befestigt ist. Der Achsschenkel 16 ist mit Armen 17,18,19 versehen, die zu seiner Verankerung am Federbein 43 des Fahrzeugs (s. Fig. 6) und zur Befestigung einer Lenkvorrichtung bestimmt sind. Zwei weitere Arme 20,21 tragen in bekannter Weise eine Scheibenbremse 12 (s. auch Fig. 6), die seitlich um die Bremsscheibe 1 greift. Am Hydraulikaggregat 15 erkennt man den Druckspeicher 6, einen Nippel 22 zum Anschluß eines Schlauches für die Verbindung mit dem nicht gezeigten Vorratsbehälter 4, der beispielweise im Radkasten des Fahrzeugs befestigt ist, eine Gewindebohrung 23 für den Anschluß einer Hydraulikleitung, die zur nicht gezeigten Bremse führt, und den Druckschalter 7 mit einem elektrischen Kabel, das zum nicht gezeigten Mikroprozessor führt.

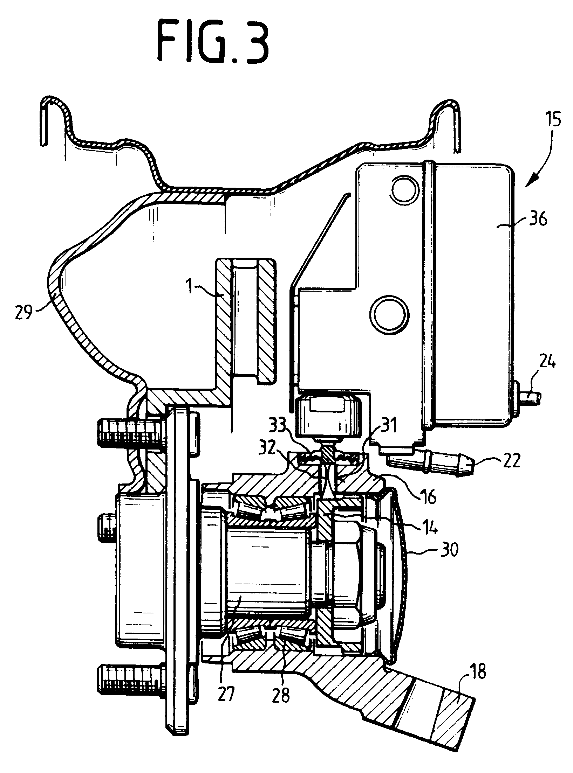

In Fig. 3 ist die Anordnung von Fig. 2 im Schnitt (A-A) dargestellt. Die Radnabe 27 ist über ein Radlager 28 drehbar am Achsschenkel 16 befestigt. Sie trägt an ihrem axial äußeren Ende die Bremsscheibe 1 und die Radfelge 29 und an ihrem axial inneren Ende die Exzenterscheibe 14. Mittels einer Schutzkappe 30 ist das Radlager 28 und die Exzenterscheibe 14 vor dem Eindringen von Staub und Schmutz geschützt. In einer radialen Bohrung 31 des Achsschenkels 16 im Bereich der Radnabe 27 ist ein Stößel 32 angeordnet, dessen inneres Ende auf der Außenfläche der Exzenterscheibe 14 gleitet. Wenn sich das Fahrzeugrad und mit ihm die Exzenterscheibe 14 dreht, wird der Stößel 32 in Richtung seiner Längsachse hin- und herbewegt. Das äußere Ende des Stößels 32 ist in Kontakt mit dem Kolben 26 der hydraulischen Pumpe 2 im Hydraulikaggregat 15 und überträgt auf diesen seine Bewegung, wobei die Pumpe 2 angetrieben wird. Eine an der Umfangsfläche des Stößels 32 dicht anliegende elastische Manschette 33 schützt den Innenraum vor Staub und Schmutz und folgt den Bewegungen des Stößels 32.

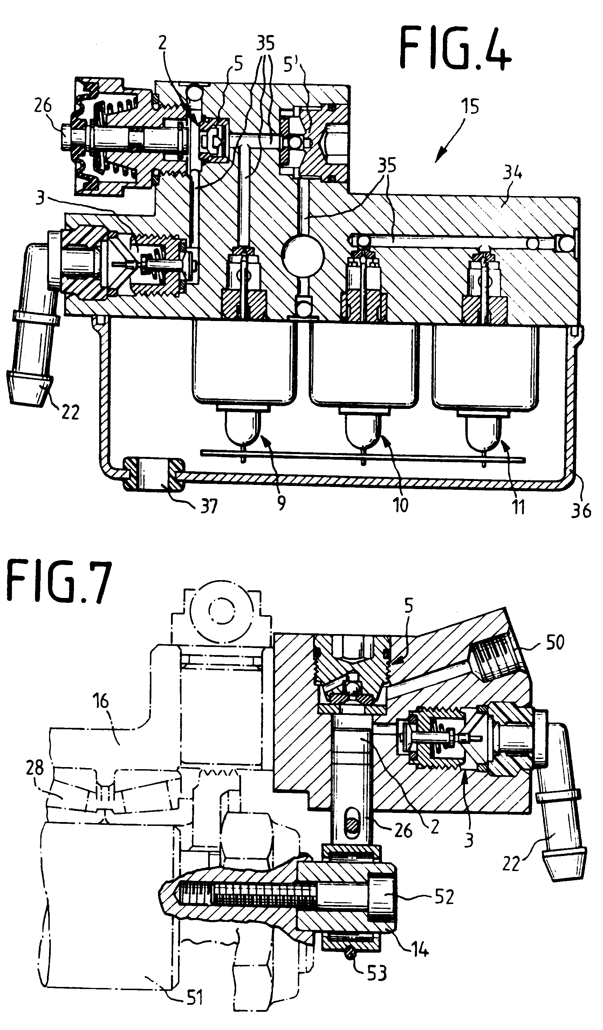

Der innere Aufbau des Hydraulikaggregats 15 ist aus Fig. 4 ersichtlich. Man erkennt den Nippel 22 zum Anschluß eines Schlauchs, der zum nicht gezeigten Vorratsbehälter 4 führt, das Saugventil 3, die Hydraulikpumpe 2 mit dem Kolben 26, die Druckventile 5,5', das Kurzschlußventil 9, das Druckaufbauventil 10 und das Druckabbauventil 11. Die genannten Bauteile sind in einem Metallblock 34 eingepreßt oder eingeschraubt und untereinander durch gebohrte Kanäle 35 für die Hydraulikflüssigkeit verbunden. Die elektrischen Betätigungen der Ventile 9,10,11 ragen aus dem Metallblock 34 hervor und werden durch einen Deckel 36 vor Umwelteinflüssen geschützt. Der Deckel 36 weist eine Öffnung 37 zum Durchgang eines elektrischen Kabels 24 auf (s. Fig. 3), das die Ventile 9,10,11 mit dem nicht gezeigten Mikroprozessor verbindet.

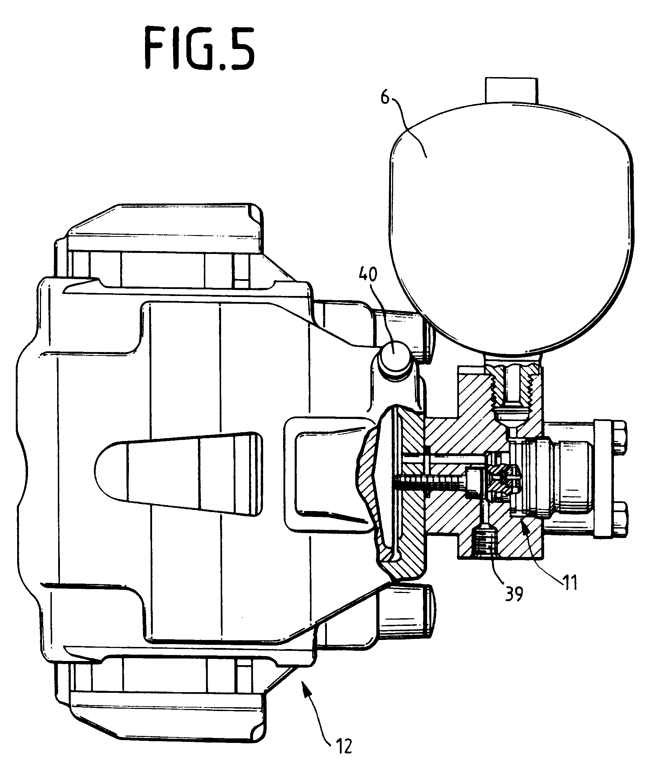

Bei einer zweiten Ausführungsform der Radbremsbaugruppe sind die Radbremse 12, das Druckaufbauventil 10, das Druckabbauventil 11 und der Druckspeicher 6 in einem kompakten Bremsaggregat 38 zusammengefaßt. In der teilweise geschnittenen Darstellung von Fig. 5 erkennt man die Radbremse 12 mit Entlüftungsventil 40, den Druckspeicher 6, das Druckabbauventil 11 und den Ausgang 39 zum Anschluß einer Hydraulikleitung für die Rückführung von Hydraulikflüssigkeit zum Vorratsbehälter 4.

Fig. 6 zeigt die fertig montierte Radbremsbaugruppe mit dem Bremsaggregat 38, einer Pumpeneinheit 42 und einer Ventileinheit 41, die alle am Achsschenkel 16 befestigt sind und mit diesem als vormontierte Einheit eingebaut werden. Untereinander sind die Einheiten mittels Hydraulikleitungen 44,45,46,47,48 verbunden, die zum Teil als Schläuche ausgeführt sind. Ein Schlauch 49 führt zum nicht gezeigten Vorratsbehälter 4, der z.B. im Radkasten befestigt ist. Die Ventileinheit 41 enthält das Kurzschlußventil 9 und das Druckventil 5'. Sie ist über eine zusätzliche, nicht gezeigte Hydraulikleitung mit dem Bremsaggregat 38 verbunden.

Aufbau und Antrieb der Pumpeinheit 42 geht aus Fig. 7 hervor. Man erkennt den Nippel 22 zum Anschluß eines Hydraulikschlauches, der zum Vorratsbehälter 4 führt, das Saugventil 3, die hydraulische Pumpe 2 mit Kolben 26, das Druckventil 5 und einen Ausgang 50 zum Anschluß einer Hydraulikleitung, die zur Ventileinheit 41 führt. Die Pumpeinheit 42 ist am Achsschenkel 16 befestigt, der auch das Radlager 28 trägt. Am axial inneren Ende der Radachse 51 ist ein Exzenter 14 mittels einer Schraube 52 befestigt. Der Kolben 26 wird direkt vom Exzenter 14 angetrieben. Ein Bügel 53 sorgt dafür, daß der Kolben 26 nicht nur in Richtung Pumpe 2 gedrückt, sondern auch in Gegenrichtung gezogen wird (s. dazu auch Fig. 6), wobei die Pumpe 2 Hydraulikflüssigkeit ansaugt.

## Patentansprüche

1. Radbremsbaugruppe für Kraftfahrzeuge, bei der zumindest
- eine hydraulisch betätigbare Radbremse (12),
- eine vom Fahrzeugrad angetriebene hydraulische Pumpe (2),
- ein Vorratsbehälter für Hydraulikflüssigkeit (4) und
- elektrisch betätigte Ventile (9,10,11) zur Steuerung des hydraulischen Drucks
im Bereich des Fahrzeugrades angeordnet sind, dadurch **gekennzeichnet**, daß die genannten Bauteile zusammen mit einem Druckspeicher (6) für die Speicherung von Betätigungsenergie untereinander zu einem eigenständigen, selbstversorgenden Teilsystem verbunden sind, das lediglich über elektrische Steuerleitungen mit einer zentralen Betätigungseinheit des Fahrzeugs in Verbindung steht und von dieser gesteuert wird.

2. Radbremsbaugruppe nach Anspruch 1, dadurch **gekennzeichnet**, daß die hydraulische Pumpe (2) als Kolbenpumpe ausgeführt ist und über einen Exzenter (14) der Radnabe (27) oder Radachse (51) angetrieben wird.

3. Radbremsbaugruppe nach Anspruch 1 oder 2, dadurch **gekennzeichnet**, daß zumindest die hydraulische Pumpe (2), der Druckspeicher (6) und die Ventile (3,5,5',9,10,11) zu einem einheitlichen, kompakten Hydraulikaggregat (15) zusammengefaßt sind.

4. Radbremsbaugruppe nach Anspruch 3, dadurch **gekennzeichnet**, daß das Hydraulikaggregat (15) am Achsschenkel (16) des Fahrzeugs befestigt ist.

5. Radbremsbaugruppe nach Anspruch 1 oder 2, dadurch **gekennzeichnet**, daß zumindest die Radbremse (12), der Druckspeicher (6) und die elektrisch betätigten Ventile (10,11) zu einem einheitlichen kompakten Bremsaggregat (38) zusammengefaßt sind.

6. Radbremsbaugruppe nach Anspruch 5, dadurch **gekennzeichnet**, daß das Bremsaggregat (38) am Achsschenkel (16) des Fahrzeugs befestigt ist.

7. Radbremsbaugruppe nach einem der vorhergehenden Ansprüche, dadurch **gekennzeichnet**, daß zumindest die Radbremse (12), die hydraulische Pumpe (2), der Druckspeicher (6), die elektrisch betätigten Ventile (9,10,11) und der Achsschenkel (16) des Fahrzeugs als vormontierte Einheit ausgeführt sind.

8. Radbremsbaugruppe nach einem der vorhergehenden Ansprüche, dadurch **gekennzeichnet**, daß im Bereich des Fahrzeugrades ein Mikroprozessor angeordnet ist, der zumindest die elektrisch betätigten Ventile (9,10,11) steuert und über ein Datenbussystem mit der zentralen Betätigungseinheit des Fahrzeugs zumindest indirekt in Verbindung steht.

9. Radbremsbaugruppe nach Anspruch 8, dadurch **gekennzeichnet**, daß Sensoren (13) für Bremsdruck und Drehgeschwindigkeit des Rades vorgesehen sind, deren Daten an den Mikroprozessor übermittelt werden, und daß der Mikroprozessor zumindest einen Teil der Antiblockier- bzw. Antischlupfregelung ausführt.

## Claims

1. A wheel brake unit for automotive vehicles, wherein at least
- one hydraulically actuatable wheel brake (12),
- a hydraulic pump (2) actuated by the vehicle wheel,
- a reservoir for hydraulic fluid (4), and
- electrically actuated valves (9,10,11) for controlling the hydraulic pressure
are arranged in the area of the vehicle wheel,
**characterized** in that the mentioned component parts along with a pressure accumulator (6) for storing actuating energy are interrelated to form an independent and self-supplying partial system which only through electrical control conduits is in communication with a central actuator of the vehicle and is controlled by the latter.

2. A wheel brake unit as claimed in claim 1,
**characterized** in that the hydraulic pump (2) is configured as a piston pump and is actuated by an eccentric (14) of the wheel hub (27) or wheel axle (51).

3. A wheel brake unit as claimed in claim 1 or claim 2,
**characterized** in that at least the hydraulic pump (2), the pressure accumulator (6) and the valves (3,5,5',9,10,11) are combined to form a uniform compact hydraulic assembly (15).

4. A wheel brake unit as claimed in claim 3,
**characterized** in that the hydraulic assembly (15) is secured to the steering knuckle (16) of the automotive vehicle.

5. A wheel brake unit as claimed in claim 1 or claim 2,
**characterized** in that at least the wheel brake (12), the pressure accumulator (6) and the electrically actuatable valves (10,11) are combined to form a uniform and compact brake assembly (38).

6. A wheel brake unit as claimed in claim 5,
**characterized** in that the brake assembly (38) is secured to the steering knuckle (16) of the automotive vehicle.

7. A wheel brake unit as claimed in any one of the preceding claims,
**characterized** in that at least the wheel brake (12), the hydraulic pump (2), the pressure accumulator (6), the electrically actuated valves (9,10,11) and the steering knuckle (16) of the vehicle are configured as a pre-assembled unit.

8. A wheel brake unit as claimed in any one of the preceding claims,
**characterized** in that disposed in the area of the vehicle wheel is a microprocessor controlling at least the electrically actuated valves (9,10,11) and, through a data bus system, at least indirectly, being in communication with the central actuator of the vehicle.

9. A wheel brake unit as claimed in claim 8,
**characterized** in that sensors (13) are provided for the brake pressure and the rotational speed of the wheel, the data of which is communicated to the microprocessor, and in that the microprocessor performs at least part of the anti-locking and anti-slip control, respectively.

## Revendications

1. Groupe structurel de frein de roue, pour véhicule automobile, dans lequel au moins :
- un frein de roue (12) à actionnement hydraulique,
- une pompe hydraulique (2) entraînée par la roue de véhicule,
- un réservoir (4) de stockage de liquide hydraulique et
- des valves (9, 10, 11) à actionnement électrique, servant à commander la pression hydraulique,
sont disposés dans la zone de la roue de véhicule,
caractérisé en ce que lesdits éléments structurels sont réunis entre eux, avec un accumulateur de pression 6 servant à l'accumulation d'une énergie d'actionnement, de façon à former un système partiel autonome et à alimentation propre qui ne communique avec une unité centrale d'actionnement du véhicule, et n'est commandé par cette dernière, que par l'intermédiaire de câbles électriques de commande.

2. Groupe structurel de frein de roue suivant la revendication 1, caractérisé en ce que la pompe hydraulique (2) est réalisée sous la forme d'une pompe à piston et est entraînée par l'intermédiaire d'un excentrique (14) du moyeu de roue (27) ou de l'essieu (51).

3. Groupe structurel de frein de roue suivant l'une des revendications 1 et 2, caractérisé en ce qu'au moins la pompe hydraulique (2), l'accumulateur sous pression (6) et les valves (3, 5, 5', 9, 10, 11) sont réunis de façon à former un ensemble hydraulique (15) unitaire compact.

4. Groupe structure de [rein de roue suivant la revendication 3, caractérisé en ce que l'ensemble hydraulique (15) est fixé à la [usée d'essieu (16) du véhicule.

5. Groupe structure de frein de roue suivant l'une des revendications 1 et 2, caractérisé en ce qu'au moins le frein de roue (12), l'accumulateur sous pression (6) et les valves (10, 11) à actionnement électrique sont réunis de façon à former un ensemble de freinage (38) unitaire compact.

6. Groupe structurel de frein de roue suivant la revendication 5, caractérisé en ce que l'ensemble de freinage (38) est fixé à la fusée d'essieu (16) du véhicule.

7. Groupe structurel de frein de roue suivant l'une des revendications précédentes, caractérisé en ce qu'au moins le frein de roue (12), la pompe hydraulique (2), l'accumulateur de pression (6), les valves (9, 10, 11) à actionnement électrique et la fusée d'essieu (16) du véhicule sont réalisés sous la forme d'une unité préassemblée.

8. Groupe structure de frein de roue suivant l'une des revendications précédentes, caractérisé en ce que, dans la zone de la roue de véhicule, il est disposé un microprocesseur qui commande au moins les valves (9, 10, 11) à actionnement électrique et qui, par l'intermédiaire d'un système de bus de données, communique au moins indirectement avec l'unité centrale d'actionnement du véhicule.

9. Groupe structurel de frein de roue suivant la revendication 10, caractérisé en ce qu'il est prévu des capteurs (13) de la pression de freinage et de la vitesse de rotation de la roue dont les données sont transmises au microprocesseur et en ce que le microprocesseur exécute au moins une partie de la régulation antiblocage ou de la régulation antiglissement.
